# EUROPÄISCHE PATENTSCHRIFT

(11) **EP 3 135 087 B1**
(45) Veröffentlichungstag und Bekanntmachung des Hinweises auf die Patenterteilung: **26.09.2018**
(21) Anmeldenummer: 16401048.0
(22) Anmeldetag: 09.08.2016
(51) Int. Cl.: A01C 5/06, A01C 7/20

(54) **VORRICHTUNG ZUM ABLEGEN VON GRANULAREM MATERIAL AUF EINER LANDWIRTSCHAFTLICHEN FLÄCHE**
DEVICE FOR DEPOSITING GRANULAR MATERIAL ON AN AGRICULTURAL SURFACE
DISPOSITIF DE DÉPOSE DE MATÉRIAU GRANULAIRE SUR UNE SURFACE AGRICOLE

(30) Priorität: 26.08.2015 DE 102015114152
(43) Veröffentlichungstag der Anmeldung: 01.03.2017
(73) Patentinhaber: Amazonen-Werke H. Dreyer GmbH & Co. KG, 49205 Hasbergen (DE)
(72) Erfinder: Johannaber, Stefan Jan, 49536 Lienen (DE)

(56) Entgegenhaltungen:
- EP-A1- 2 213 153
- FR-A1- 3 001 607
- US-A1- 2015 237 793
- US-B1- 6 651 570

## Beschreibung

Die Erfindung betrifft eine Vorrichtung zum Ablegen von granularem Material auf einer landwirtschaftlichen Fläche.

Derartige Vorrichtungen finden üblicherweise bei Sämaschinen Anwendung, um Saatgut in einer Särille abzulegen.

Vorrichtung zum Ablegen von granularem Material sind bekannt aus US 6 651 570 B1, US 2015/237793 A1, EP 2 213 153 A1 und FR 3 001 607 A1.

Es ist bekannt, für diese Vorrichtungen einen Scharkörper zu verwenden, zu dem wenigstens eine Saatgutleitung führt. Über die Saatgutleitung kann der Scharkörper beispielsweise mit einer Vereinzelungsvorrichtung verbunden sein. Um die Körner in dem Abstand abzulegen, der durch die Vereinzelung vorgegeben wird, sehen bekannte Systeme beispielsweise Fangrollen vor, die einem Furchenformer nachlaufend angeordnet sind und aus der Saatgutleitung kommende Körner fangen und/oder in die Bodenfurche drücken. Alternativ zu solchen Fangrollen finden auch beispielsweise Förderbänder Anwendung.
Bei der Vereinzelung von kleinkörnigem Getreide, wie etwa Weizen, Roggen, Gerste, Hafer oder Raps wird durch die Vereinzelung ein sehr geringer Abstand zwischen den Körnen vorgegeben. Außerdem weisen die Körner beim Austritt aus der Saatgutleitung eine hohe Geschwindigkeit auf. In diesem Fall ist es mit bekannten Vorrichtungen schwierig, die Körner mit hoher Genauigkeit und konstantem Abstand in der Särille abzulegen.
Aufgabe der Erfindung ist es daher, eine Vorrichtung zum Ablegen von granularem Material auf einer landwirtschaftlichen Fläche bereitzustellen, welche es ermöglicht, vereinzelte, auf Abstand gebrachte Körner mit möglichst hoher Genauigkeit auf der landschaftlichen Fläche abzulegen.
Diese Aufgabe wird durch eine Vorrichtung gemäß Patentanspruch 1 gelöst. Weitere vorteilhafte Ausgestaltungen der Erfindung sind in den abhängigen Ansprüchen angegeben.

Gemäß der Erfindung ist es also vorgesehen, dass die Vorrichtung ein Doppelscheibenschar umfasst, wobei an den einander zugewandten Seiten der Scheiben des Doppelscheibenschars eine Fangeinrichtung angeordnet ist, die so ausgebildet ist, dass ein über eine Zufuhrleitung zugeführtes Korn fixiert, in einen Ablagebereich bewegt und im Ablagebereich abgegeben wird. Durch diese Fangeinrichtung ist es also möglich, schnelle Körner, die über die Zufuhrleitung in einen Bereich zwischen den beiden Scheiben des Doppelscheibenschars eingebracht werden, zu fangen, zur landwirtschaftlichen Fläche hin zu bewegen, und dann definiert abzulegen. Durch die Fixierung des Korns zwischen den Scheiben des Doppelscheibenschars in der Fangeinrichtung ist es insbesondere möglich, den Abstand, mit dem die Körner zugeführt werden, beizubehalten. Auch eine definierte Ablage wird durch die Fixierung des Korns in der Fangeinrichtung ermöglicht.
Bei dem granularen Material kann es sich insbesondere um Saatgut handeln, alternativ oder zusätzlich jedoch auch um granulares Düngemittel oder granulares Pestizid. Das Saatgut kann insbesondere Saatgut für Getreide, wie etwa Weizen, Roggen, Gerste, Hafer oder Raps, sein.
Die Mündung der Zufuhrleitung kann insbesondere zwischen den beiden Scheiben des Doppelscheibenschars angeordnet sein.

Die Fangeinrichtung umfasst eine Beschichtung an den einander zugewandten Seiten der Scheiben des Doppelscheibenschars, wobei die Beschichtung ein elastisches Material umfasst.
Die Beschichtung der beiden Scheiben kann derart in einander gegenüberliegenden Bereichen der Scheiben ausgebildet sein, dass in einem ersten Umfangsbereich der Scheiben ein vorherbestimmter Abstand zwischen den Oberflächen der Beschichtungen besteht, während sich die Beschichtungen in einem zweiten Umfangsbereich berühren. Das granulare Material kann insbesondere in dem ersten Umfangsbereich zugeführt werden, in dem die Beschichtungen der Scheiben voneinander beabstandet sind.
Der Abstand der Oberflächen der Beschichtungen zueinander kann in Drehrichtung des Doppelscheibenschars vom ersten Umfangsbereich zum zweiten Umfangsbereich hin abnehmen, bis sich die Beschichtungen berühren. Dadurch wird das granulare Material zwischen den Beschichtungen eingeklemmt und damit fixiert.

Als Drehrichtung wird die Bewegungsrichtung bezeichnet, in der sich die Scheiben des Doppelscheibenschars im Betrieb der Vorrichtung bewegen.

In einem dritten Umfangsbereich, der in Drehrichtung des Doppelscheibenschars gesehen nach oder stromabwärts des zweiten Umfangsbereichs angeordnet ist, kann der Abstand zwischen den Oberflächen der Beschichtungen wieder zunehmen, so dass sich die Beschichtungen nicht mehr berühren. Dieser dritte Umfangsbereich kann insbesondere dem Ablagebereich entsprechen. In diesem Ablagebereich kann das Korn des granularen Materials durch den größer werdenden Abstand zwischen den Oberflächen der Beschichtungen aus der Fangeinrichtung gelöst und auf der landwirtschaftlichen Fläche abgelegt werden.

Dadurch, dass die Beschichtungen ein elastisches Material umfassen, kann eine Beschädigung des granularen Materials während es durch die Beschichtung fixiert wird, vermieden oder wenigstens reduziert werden.

Die Beschichtung kann insbesondere ringförmig an den einander zugewandten Seiten der Scheiben des Doppelscheibenschars angeordnet sein. Dadurch ist es möglich, Beschichtungsmaterial einzusparen. Die Beschichtung kann in diesem Fall nur in dem Bereich angeordnet sein, in dem das granulare Material fixiert und bewegt werden muss.

Der ringförmige Bereich, in dem die Beschichtung angeordnet wird, kann eine Breite quer zur Drehrichtung von 2 bis 5 cm aufweisen. Die Beschichtung kann jeweils eine Dicke senkrecht zur jeweiligen Scheibe von 0.3 bis 1 cm aufweisen.

Die Beschichtung kann einen Weichschaum oder einen Hartschaum, insbesondere einen Polyurethanschaum, umfassen. Der Polyurethanschaum kann entweder als Weichschaum oder als Hartschaum ausgebildet sein. Alternativ kann die Beschichtung auch ein Elastomer, beispielsweise einen vulkanisierten Kautschuk, umfassen oder daraus bestehen.

Alternativ zur Beschichtung, die ein elastisches Material umfasst, kann auch eine Beschichtung vorgesehen sein, die eine Vielzahl von Borsten umfasst.
Die Festigkeit oder Steifheit der Borsten kann dabei so gewählt sein, dass ein Korn durch die Borsten zwischen den Scheiben fixiert werden kann. Gleichzeitig können die Borsten eine Flexibilität aufweisen, um eine Beschädigung der Körner des granularen Materials zu verhindern oder wenigstens zu reduzieren.
Das Korn des granularen Materials kann im Ablagebereich insbesondere derart abgegeben werden, dass seine Geschwindigkeitskomponente parallel zur landwirtschaftlichen Fläche der Tangentialgeschwindigkeit der Drehung des Doppelscheibenschars entspricht. Diese Tangentialgeschwindigkeit kann wiederum der Fahrgeschwindigkeit der Sämaschine, welche die Vorrichtung umfasst, entsprechen. Eine derartige Ablage des granularen Materials wird als "Nullablage" bezeichnet.
Die Scheiben des Doppelscheibenschars können gegeneinander geneigt sein, wobei der Punkt der größten Annäherung der Scheiben vor oder stromaufwärts des Ablagebereichs angeordnet ist. Dadurch weitet sich der Abstand zwischen den Scheiben automatisch zum Ablagebereich hin wieder auf, wodurch sich auch der Abstand zwischen den Oberflächen der Beschichtungen weitet, so dass ein fixiertes Korn aus der Fangeinrichtung gelöst werden kann.
Die Scheiben können insbesondere keilförmig zueinander angeordnet sein.
Die Vorrichtung kann außerdem ein Abstreifelement umfassen, welches so ausgebildet ist, dass es Körner im Ablagebereich aus der Fangeinrichtung löst. Dadurch kann die Zuverlässigkeit der Ablage erhöht werden. Insbesondere können dadurch Körner, welche gegebenenfalls an einer der Beschichtungen anhaften, von der Beschichtung gelöst werden.

Die Erfindung stellt außerdem ein System gemäß Anspruch 6 bereit, umfassend eine Vereinzelungsvorrichtung und eine oben beschriebene Vorrichtung.
Die Vereinzelungsvorrichtung kann im Betrieb des Systems insbesondere oberhalb der Vorrichtung zum Ablegen von granularem Material angeordnet sein. Die Zufuhrleitung kann insbesondere einer Verbindungsleitung entsprechen, welche einen Ausgang der Vereinzelungsvorrichtung mit dem Doppelscheibenschar verbindet.

Die Erfindung stellt außerdem eine Sämaschine gemäß Anspruch 7 bereit,
umfassend eine oben beschriebene Vorrichtung oder ein oben beschriebenes System. Bei der Sämaschine kann es sich insbesondere um eine Einzelkornsämaschine handeln.
Das oben beschriebene Doppelscheibenschar kann gleichzeitig einen Furchenöffner der Sämaschine bilden. Das granulare Material kann dann in einer durch das Doppelscheibenschar gebildeten Särille abgelegt werden.
Weitere Merkmale und Vorteile der Erfindung werden nachfolgend anhand der beispielhaften Figuren erläutert. Dabei zeigt:
- Figur 1: einen Querschnitt durch eine beispielhafte Vorrichtung zum Ablegen von granularem Material auf einer landwirtschaftlichen Fläche; und
- Figur 2: eine zweite Schnittdarstellung einer beispielhaften Vorrichtung zum Ablegen von granularem Material auf einer landwirtschaftlichen Fläche.

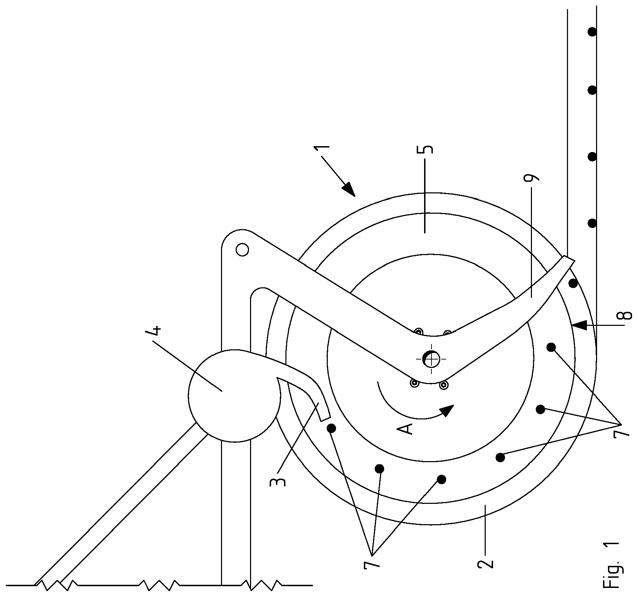

In Figur 1 ist eine beispielhafte Vorrichtung zum Ablegen von granularem Material auf einer landwirtschaftlichen Fläche gemäß der Erfindung gezeigt. Die Vorrichtung umfasst ein Doppelscheibenschar 1, von dem in Figur 1 aufgrund der Schnittdarstellung nur eine Scheibe 2 zu sehen ist. Von dieser Scheibe 2 ist die der zweiten, nicht dargestellten, Scheibe zugewandte Fläche zu sehen. Die zweite, nicht dargestellte Scheibe wäre also oberhalb der Zeichnungsebene angeordnet.

In Figur 1 ist außerdem eine Zufuhrleitung 3 zu erkennen, über die Körner des granularen Materials in einen Bereich zwischen den beiden Scheiben des Doppelscheibenschars 1 einbringbar sind.

Die Drehrichtung des Doppelscheibenschars 1 wird durch den in Figur 1 dargestellten Pfeil A illustriert. Die Drehachse der Scheibe 2 ist mit X gekennzeichnet.

Bezogen auf diese Drehrichtung der Scheibe 2 werden die Körner über die Zufuhrleitung tangential in eine Fangeinrichtung eingebracht, die in diesem Beispiel in Form einer ringförmigen Beschichtung 5 auf beiden Scheiben ausgebildet ist.

Die Zufuhrleitung 3 verbindet in diesem Beispiel das Doppelscheibenschar 1 mit einer Dosierungsvorrichtung 4, welche oberhalb des Doppelscheibenschars 1 angeordnet ist. Sowohl Dosierungsvorrichtung 4 als auch Doppelscheibenschar 1 sind an einem hier nicht näher gezeigten Rahmen einer Sämaschine angeordnet.

Die ringförmige Beschichtung 5 besteht aus einem elastischen Material und ist auf der Seite der Scheibe 2 angeordnet, die der zweiten hier nicht gezeigten Scheibe des Doppelscheibenschars 1 gegenüberliegt. Auf der zweiten Scheibe ist in einem korrespondierenden ringförmigen Bereich ebenfalls eine Beschichtung 5 aus dem elastischen Material angeordnet, wodurch die Fangeinrichtung gemäß diesem Ausführungsbeispiel gebildet wird. Durch diese Fangeinrichtung kann ein über die Zufuhrleitung zugeführtes Korn 7 fixiert, in einen Ablagebereich 8 bewegt und im Ablagebereich 8 abgegeben werden.

Um ein zuverlässiges Ablegen der Körner 7 zu ermöglichen, ist in Figur 1 außerdem ein Abstreifelement 9 dargestellt, welches so ausgebildet und angeordnet ist, dass es Körner 7 im Ablagebereich 8 aus der Fangeinrichtung löst.

Durch die hier gezeigte Vorrichtung ist es möglich, mit hoher Genauigkeit granulares Material, welches von einer Vereinzelungseinrichtung 4 zugeführt wird, auf einer landwirtschaftlichen Fläche in einem definierten Abstand abzulegen.

Die Beschichtung 5 kann einen Polyurethanschaum umfassen oder aus einem solchen bestehen.

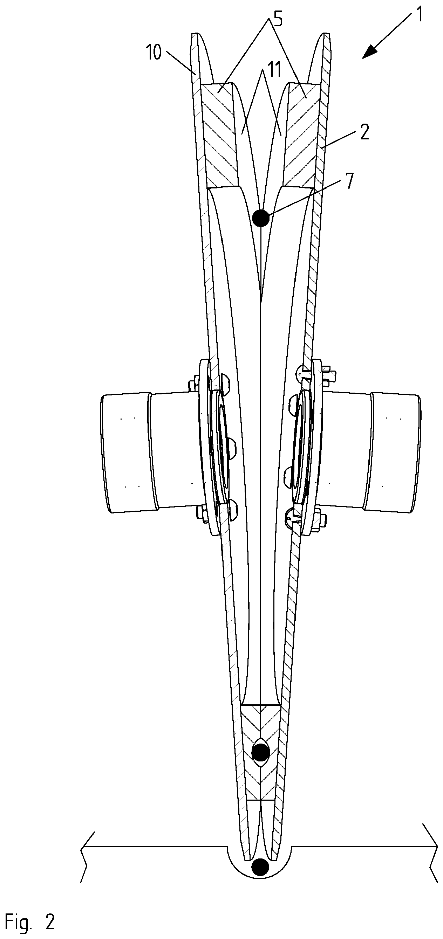

Figur 2 zeigt eine weitere Schnittdarstellung einer beispielhaften Vorrichtung zum Ablegen von granularem Material. Figur 2 zeigt insbesondere einen Schnitt entlang einer Ebene, die parallel zu den Drehachsen der Scheiben des Doppelscheibenschars verläuft. Die Drehrichtung in Figur 2 zeigt oberhalb der Drehachse X in die Blattebene hinein und weist im unteren Bereich aus der Blattebene heraus.

Zu erkennen sind die beiden Scheiben des Doppelscheibenschars 1, nämlich die erste Scheibe 2 sowie eine zweite Scheibe 10. Die Scheiben sind gegeneinander geneigt, so dass der Abstand zwischen den beiden Scheiben entlang des Umfangs variiert.

Deutlich zu erkennen ist in Figur 2 die Beschichtung 5, welche die Fangeinrichtung bildet und an den einander zugewandten Seiten der Scheiben 2, 10 des Doppelscheibenschars 1 angeordnet ist. Die Beschichtung ist wie im Beispiel der Figur 1 ringförmig angeordnet.

Dadurch, dass die Scheiben zueinander geneigt sind, während die Beschichtungen 5 eine konstante Dicke aufweisen, variiert der Abstand zwischen der Oberfläche 11 der Beschichtungen 5 entlang des Umfangs der Scheiben. Ein tangential eingebrachtes Korn 7 wird daher in einem Umfangsbereich, in dem der Abstand zwischen den Oberflächen 11 der Beschichtungen 5 kleiner oder gleich dem Durchmesser des Korns 7 ist, fixiert. Dadurch, dass die Beschichtung 5 aus einem elastischen Material besteht, insbesondere aus Polyurethanschaum, können Beschädigungen des Korns 7 verhindert werden, auch wenn in einem Umfangsbereich sich die Oberflächen 11 der Beschichtungen 5 berühren.

Wenn sich im Ablagebereich der Abstand zwischen den Oberflächen 11 der Beschichtungen 5 aufgrund der Neigung der Scheiben, 2, 10 zueinander wieder vergrößert, wird das Korn von der Fangeinrichtung wieder freigegeben und kann im Ablagebereich auf die landwirtschaftliche Fläche abgelegt werden. Dafür kann, wie in Figur 1 dargestellt, ein zusätzliches Abstreifelement vorgesehen sein, welches in der Figur 2 nicht gezeigt ist.

Anstelle der Beschichtung 5 aus einem elastischen Material könnte auch eine Beschichtung vorgesehen sein, die eine Vielzahl von Borsten umfasst. Die Borsten würden dann senkrecht zu den Scheiben 2, 10 angeordnet sein. Die Anzahldichte der Borsten kann dabei so gewählt werden, dass ein Korn 7 zuverlässig zwischen den sich gegenüberliegenden Borsten der Fangeinrichtung fixiert werden kann.

Durch die Fixierung der Körner 7 in der Fangeinrichtung kann die Ablage der Körner 7 mit der Fahrgeschwindigkeit der Sämaschine erfolgen, also eine so genannte Nullablage.

Es versteht sich, dass in den zuvor beschriebenen Ausführungsbeispielen genannte Merkmale nicht auf diese speziellen Kombinationen beschränkt sind und auch in beliebigen anderen Kombinationen möglich sind.

## Patentansprüche

1. Vorrichtung zum Ablegen von granularem Material auf einer landwirtschaftlichen Fläche, umfassend:
ein Doppelscheibenschar (1); und
eine Zufuhrleitung (3), über die Körner (7) des granularen Materials in einen Bereich zwischen den beiden Scheiben (2, 10) des Doppelscheibenschars (1) einbringbar sind;
wobei an den einander zugewandten Seiten der Scheiben (2, 10) des Doppelscheibenschars (1) eine Fangeinrichtung angeordnet ist, die so ausgebildet ist, dass ein über die Zufuhrleitung (3) zugeführtes Korn (7) fixiert, in einen Ablagebereich (8) bewegt und im Ablagebereich (8) abgegeben wird,
**dadurch gekennzeichnet, dass** die Fangeinrichtung eine Beschichtung (5) an den einander zugewandten Seiten der Scheiben (2, 10) des Doppelscheibenschars (1) umfasst, wobei die Beschichtung (5) ein elastisches Material und/oder eine Vielzahl von Borsten umfasst.

2. Vorrichtung nach Anspruch 1, wobei die Beschichtung (5) ringförmig an den einander zugewandten Seiten der Scheiben (2, 10) des Doppelscheibenschars (1) angeordnet ist.

3. Vorrichtung nach Anspruch 1 oder 2, wobei die Beschichtung (5) einen Weichschaum oder einen Hartschaum, insbesondere einen Polyurethanschaum, umfasst.

4. Vorrichtung nach einem der vorangegangenen Ansprüche, wobei die Scheiben (2, 10) des Doppelscheibenschars (1) gegeneinander geneigt sind, wobei der Punkt der größten Annäherung der Scheiben stromaufwärts des Ablagebereichs (8) angeordnet ist.

5. Vorrichtung nach einem der vorangegangenen Ansprüche, außerdem umfassend ein Abstreifelement (9), welches so ausgebildet ist, das es Körner (7) im Ablagebereich (8) aus der Fangeinrichtung löst.

6. System umfassend:
Vereinzelungsvorrichtung; und
eine Vorrichtung nach einem der vorangegangenen Ansprüche.

7. Sämaschine umfassend eine Vorrichtung nach einem der Ansprüche 1-5 oder ein System nach Anspruch 6.

## Claims

1. Device for depositing granular material on an agricultural surface, comprising:
a double disc type coulter (1); and
a feed line (3) via which grains (7) of the granular material can be introduced into a region between the two discs (2, 10) of the double disc type coulter (1);
wherein, on those sides of the discs (2, 10) of the double disc type coulter (1) which face towards one another, there is arranged a catching device which is designed such that a grain (7) fed via the feed line (3) is fixed, moved into a depositing region (8) and deposited in the depositing region (8),
**characterized in that**
the catching device comprises a coating (5) on those sides of the discs (2, 10) of the double disc type coulter (1) which face toward one another, wherein the coating (5) comprises an elastic material and/or a multiplicity of bristles.

2. Device according to Claim 1, wherein the coating (5) is arranged in ring-shaped fashion on those sides of the discs (2, 10) of the double disc type coulter (1) which face towards one another.

3. Device according to Claim 1 or 2, wherein the coating (5) comprises a soft foam or a hard foam, in particular a polyurethane foam.

4. Device according to one of the preceding claims, wherein the discs (2, 10) of the double disc type coulter (1) are inclined toward one another, wherein the point of closest proximity of the discs is arranged upstream of the depositing region (8).

5. Device according to one of the preceding claims, furthermore comprising a stripper element (9) which is designed so as to detach grains (7) from the catching device in the depositing region (8).

6. System comprising:
a separating device; and
a device according to one of the preceding claims.

7. Sowing machine comprising a device according to one of Claims 1-5 or a system according to Claim 6.

## Revendications

1. Dispositif pour déposer un matériau granulaire sur une surface agricole, comprenant:
un soc à double disque (1); et
une conduite d'amenée (3), par laquelle des grains (7) du matériau granulaire peuvent être introduits dans une région entre les deux disques (2, 10) du soc à double disque (1);
dans lequel un dispositif de capture est disposé sur les côtés tournés l'un vers l'autre des disques (2, 10) du soc à double disque (1), et est configuré de telle manière qu'un grain (7) amené par la conduite d'amenée (3) soit fixé, déplacé dans une zone de dépôt (8) et libéré dans la zone de dépôt (8)
**caractérisé en ce que** le dispositif de capture comprend un revêtement (5) sur les côtés tournés l'un vers l'autre des disques (2, 10) du soc à double disque (1),
dans lequel le revêtement (5) comprend un matériau élastique et/ou une multiplicité de poils.

2. Dispositif selon la revendication 1, dans lequel le revêtement (5) est disposé sous forme annulaire sur les côtés tournés l'un vers l'autre des disques (2, 10) du soc à double disque (1).

3. Dispositif selon la revendication 1 ou 2, dans lequel le revêtement (5) comprend une mousse souple ou une mousse dure, notamment une mousse de polyuréthane.

4. Dispositif selon l'une quelconque des revendications précédentes, dans lequel les disques (2, 10) du soc à double disque (1) sont inclinés l'un par rapport à l'autre, dans lequel le point de plus grande proximité des disques est disposé en amont de la zone de dépôt (8).

5. Dispositif selon l'une quelconque des revendications précédentes, comprenant par ailleurs un élément de raclage (9), qui est configuré de telle manière qu'il détache des grains (7) du dispositif de capture dans la zone de dépôt (8).

6. Système comprenant:
un dispositif de séparation; et
un dispositif selon l'une quelconque des revendications précédentes.

7. Semoir comprenant un dispositif selon l'une quelconque des revendications 1 à 5 ou un système selon la revendication 6.
